# EUROPÄISCHE PATENTANMELDUNG

(11) **EP 2 463 033 A2**
(43) Veröffentlichungstag der Anmeldung: **13.06.2012**
(21) Anmeldenummer: 11009569.2
(22) Anmeldetag: 03.12.2011
(51) Int. Cl.: B07B 13/18, B07B 1/46, G01N 15/02, G01B 7/32

(54) **Verfahren zum Betreiben einer Siebmaschine zur Korngrössenanalyse**

(30) Priorität: 08.12.2010 DE 102010053821
(71) Anmelder: HOSOKAWA ALPINE Aktiengesellschaft, 86199 Augsburg (DE)
(72) Erfinder: Stein, Jürgen, 86391 Stadtbergen (DE); Schönwetter, Markus, 86343 Königsbrunn (DE)

(57) **Zusammenfassung**

Bei einem Verfahren zum Betreiben einer Siebmaschine zur Korngrößenanalyse welches folgende Schritte umfasst: Messung der Maschenweite eines Siebes mit einer Messvorrichtung, Kennzeichnung des Siebes mit der Maschenweite, und Durchführung einer Siebung mit mindestens einem Sieb soll eine Automatisierung des Verfahrens Bedienfehler ausschließen. Des weiteren soll die Messgenauigkeit erhöht und die Vergleichbarkeit von Siebungen verbessert werden. Dies wird dadurch erreicht, dass das Sieb (4) mit der gemessene Maschenweite gekennzeichnet wird und dass die Kennzeichnung des Siebes mit der gemessene Maschenweite automatisch von der Messvorrichtung vorgenommen wird und dass die gemessene Maschenweite durch eine Datenerfassungsvorrichtung (2) in der Siebmaschine aus dem Kennzeichen (1) ausgelesen wird und dass die gemessene Maschenweite zur Bestimmung des Siebergebnisses herangezogen wird.

## Beschreibung

Die Erfindung richtet sich auf ein Verfahren zum Betreiben einer Siebmaschine zur Korngrößenanalyse welches folgende Schritte umfasst:
- Messung der Maschenweite eines Siebes mit einer Messvorrichtung
- Kennzeichnen des Siebes mit der Maschenweite
- Durchführung einer Siebung mit mindestens einem Sieb.

Siebmaschinen der gattungsgemäßen Art und entsprechende Verfahren zum Betreiben kommen bei der Analysensiebung zum Einsatz. Sie dienen der Bestimmung von Feinheiten und Korngrößenverteilungen trockner pulverförmiger Materialien. Analysensiebungen werden immer weiter automatisiert, um Bedienfehler auszuschließen und eine hohe Messgenauigkeit und Reproduzierbarkeit zu erreichen. Verbreitet kommen Luftstrahlsiebmaschinen mit Sieb oder Vibrationssiebmaschinen mit Siebturm zum Einsatz.

Eine gattungsgemäße Siebmaschine wie ein Luftstrahlsieb besteht aus einem Gehäuse auf das ein Sieb aufgesetzt wird. Das Sieb besteht aus einem Rahmen mit ebenem Siebboden aus Siebgewebe. Der Siebraum oberhalb des Siebbodens wird während einer Siebung mit einem Deckel verschlossen. Unterhalb des Siebes weist das Gehäuse einen Freiraum auf. In diesem Raum ist eine um die vertikale Mittelachse des Siebes drehbare Schlitzdüse angeordnet. Während einer Siebung wird durch die gleichmäßig rotierende Schlitzdüse von unten Luft gegen das Sieb geblasen. Der Luftstrahl bläst die Maschen des Siebes frei und wirbelt das auf dem Sieb liegende Siebgut auf. Die Feinanteile des Siebgutes werden vom Luftstrahl mitgerissen und durch das Siebgewebe von oben nach unten in den Raum unterhalb des Siebes transportiert und von dort aus der Siebmaschine ausgetragen. Die groben Anteile, die größer sind als die Maschenweite des jeweiligen Siebes, können das Sieb nicht passieren und bleiben nach der Siebung auf dem Sieb liegen.

Zur Bestimmung einer Korngrößenverteilungskurve müssen mehrere Siebungen mit Sieben unterschiedlicher Maschenweiten durchgeführt werden. Dazu wird der nach der ersten Siebung auf dem Sieb zurückgebliebene grobe Anteil, der Siebrückstand, weiteren Siebungen unterzogen. Das zuerst verwendete Sieb einer ersten Maschenweite wird aus der Siebmaschine entfernt und ein zweites Sieb mit einer größeren Maschenweite eingesetzt. Der Siebrückstand aus der ersten Siebung wird dem zweiten Sieb aufgegeben und eine zweite Siebung durchgeführt. Der aus der zweiten Siebung verbleibende Siebrückstand wird anschließen einer dritten Siebung zugeführt. Je nach Bedarf können mehrere Siebungen in den jeweils gewünschten Korngrößenschritten mit Sieben unterschiedlicher Maschenweite durchgeführt werden. Nach jeder erfolgten Siebung muss der Siebrückstand gewogen werden, um die Korngrößenverteilungskurve bestimmen zu können.
Es kann aber auch für jede Siebung Material neu eingewogen werden und einer Siebung ausgesetzt werden.

Alternativ können Vibrationssiebmaschinen mit Siebturm eingesetzt werden. Bei diesem Siebprinzip werden mehrere Siebe aufeinandergestapelt. Die Maschenweiten nehmen von oben nach unten ab. Das zu siebende Material wird auf das oberste Sieb gegeben und der Siebturm mit einem Deckel verschlossen. Die Siebmaschine versetzt das Material in eine dreidimensionale Bewegung. Nach der Siebung befindet sich auf jedem Sieb die Materialmenge die größer als die Maschenweite des Siebs ist, auf dem es liegt und kleiner als die Maschenweite des darüber befindlichen Siebes. Die Materialmenge der entsprechenden Partikelfraktionen kann gewogen und das Siebergebnis bestimmt werden.

In der Vergangenheit wurden Analysensiebmaschinen wie z.B. Luftstrahisiebe manuell bedient, in den letzten Jahren bestand ein Bestreben Analysensiebungen zu automatisieren und wesentliche Prozessparameter wie Probenmenge, Siebdauer, Luftmenge und Unterdruck automatisch zu erfassen und/oder einzustellen. Aus dem Stand der Technik z.B. ist die Integration von Wägezellen, zur automatischen Erfassung der Probenmenge, in das Luftstrahlsieb bekannt. Außerdem ist bekannt eine Steuereinrichtung für Luftstrahisiebe vorzusehen, bei der als Eingangsgrößen die Maschenweite des Siebes, Materialeigenschaften der Probe und /oder Anwendungsbereich des Materials eingegeben werden, aufgrund derer, vorher definierte Siebungsparameter wie Unterdruck erfasst und geregelt werden und die Siebdauer vorbestimmt ist. So können Siebungen nach internen Prüfvorschriften durchgeführt werden und genaue, reproduzierbare, automatisierte Analysen realisiert werden.

Weiterhin sind Siebmaschinen bekannt (DE 199 21 409 A1), bei denen die Maschenweite des jeweiligen Siebeinsatzes durch die Siebmaschine automatisch erkannt wird, indem die Siebmaschinen mit einem Sensor ausgerüstet wird, der das eingesetzte Sieb automatisch identifiziert und eventuell zusätzliche Informationen an dem Sieb speichert werden können um bei Analysen-Siebmaschinen allgemein die Analysensicherheit gegen Fehlbedienen zu erhöhen.

Bei allen bekannten Analysensiebverfahren wird die für das jeweilige Sieb angegebene nominale Maschenweite zur Auswertung herangezogen. Bei ausgewählten Siebmaschinen ist, wie im Stand der Technik beschrieben, die nominale Maschenweite auf einem am Sieb befestigten Transponder gespeichert und kann automatisch ausgelesen und bei der Auswertung berücksichtigt werden.

Siebe, die als Analysensiebe eingesetzt werden, müssen den technischen Anforderungen und einer Prüfung nach DIN ISO 3310-1 genügen. Danach dürfen Analysensiebe für Analysen im Bereich von 20 - 1000 µm eine maximal zulässige Abweichung von + 14 bis 70% von der Nennmaschenweite (nominalen Maschenweite) aufweisen. Die maximale Toleranz des Mittelwertes aller Maschen beträgt +/- 3,0 bis 11,5%. Spezialsiebe können die doppelte Genauigkeit aufweisen.

Für Analysensiebe kann ein Abnahmeprüfzeugnis erstellt werden. Dazu wird die tatsächliche Maschenweite mit ihren Toleranzen optoelektronisch gemessen und in das Prüfzeugnis aufgenommen.

Die zum Einsatz kommenden Siebe haben eine nominale Maschenweite und werden in unterschiedlichen Siebreihen eingeteilt.

Der Erfindung liegt die Aufgabe zugrunde Analysensiebungen zu Automatisieren um Bedienfehler auszuschließen und Messgenauigkeit von Analysensiebungen zu erhöhen sowie eine bessere Vergleichbarkeit von Analysensiebungen zu ermöglichen.

Bei einem Verfahren zum Betreiben einer Siebmaschine der eingangs beschriebenen Art wird die Aufgabe erfindungsgemäß dadurch gelöst, dass das Sieb mit der gemessenen Maschenweite gekennzeichnet wird und dass die Kennzeichnung des Siebes mit der gemessene Maschenweite automatisch von der Messvorrichtung vorgenommen wird und dass die gemessene Maschenweite durch eine Datenerfassungsvorrichtung in der Siebmaschine aus der Kennzeichnung ausgelesen wird und dass die gemessene Maschenweite zur Bestimmung des Siebergebnisses herangezogen wird.

Um dieses zu ermöglichen wird bei den gattungsgemäßen Siebmaschinen den Sieben eine eindeutige Kennzeichnung zugewiesen. Zunächst wird die Maschenweite der Siebe z.B. optoelektronisch bestimmt, wie bei zertifizierten Sieben bekannt und in der DIN ISO 3310-1 festgelegt. Die gemessene, tatsächliche mittlere Maschenweite des Siebes wird von der Messeinrichtung nun dem Sieb automatische zugeordnet. Dazu weist das optoelektronische Gerät zum Vermessen der Maschenweite von Sieben zusätzlich ein Schreib-/Lesegerät auf. Die Siebmaschine selbst wird mit einem entsprechenden Lesegerät ausgerüstet.

Bei einer Siebung wird die tatsächliche mittlere Maschenweite der Siebe ausgelesen und bei der Auswertung der Messung bei der Bestimmung des Siebergebnisses berücksichtigt. So ist sichergestellt, dass die gemessene Siebmaschenweite automatisch im Siebergebnis berücksichtigt wird. Jede Verwechselung oder Bedienfehler ist so ausgeschlossen. Das Siebergebnis kann z.B. die Korngrößenverteilung sein.

Weitere Daten aus der Maschenweitenmessung wie Mittelwert der Maschenweite, Standardabweichung , kleinste und größte Masche, oder Anzahlverteilung der Maschenweite können zur Angabe eines Verlässlichkeitswertes für die Analyse verwendet werden.

Dieses Verfahren bietet sich insbesondere für Analysensiebungen an. Diese können mit einem Luftstrahlsieb mit einem Sieb oder mit einer Vibrationssiebmaschine mit Siebturm oder anderen Siebmaschinen die unter Einbringen von Bewegung in ein Sieb funktionieren, durchgeführt werden, die mit einer Vorrichtung zur Erfassung der Siebdaten ausgerüstet sind, d.h. Siebe mit einer Kennzeichnung und Siebmaschinen mit einer entsprechenden Lesevorrichtungen.

Bei Analysen die nach diesem Verfahren durchgeführt werden, kann die Angabe einer falschen Maschenweite ausgeschlossen werden, da die Messvorrichtung die Siebmaschenweite automatisch und eindeutig dem Sieb zuordnet. Die Analysen weisen eine größere Messgenauigkeit auf als Analyse mit den bekannten Verfahren, da das Siebergebnis auf die reale Maschenweite bezogen ist und nicht auf die nominale Maschenweite. Das Verfahren erhöht auch die Vergleichbarkeit von Analysen die auf gleichen oder unterschiedlichen Siebmaschinen mit unterschiedlichen Sieben durchgeführt werden.

Nicht nur Siebe vor dem Ersteinsatz können so vermessen und gekennzeichnet werden, auch gebrauchte Siebe können neu vermessen und gekennzeichnet werden und so rekalibriert, liefern sie wieder sehr genaue Ergebnisse.

Das Siebergebnis kann durch Umrechnung auf die nominale Maschenweite bezogen werden. Alternativ steht eine Auswertung zur Verfügung, die das Siebergebnis auf die nominale Maschenweite bezieht, die zusätzlich im Kennzeichen des Siebes gespeichert ist. So ist gewährleistet, dass auch der Vergleich mit Siebanalysen mit Sieben, bei denen nur der Nominalwert der Maschenweite angegeben ist, ermöglicht wird.

In einer weiteren Ausgestaltung der Erfindung ist das Siebergebnis eine Korngrößenverteilung.

In einer Ausgestaltung der Erfindung ist das Kennzeichen des Siebes eine Zeichenfolge oder ein optisches Muster, wie ein Barcode oder ein 2-D-Code. Es können auch RFID-Transponder eingesetzt werden auf denen das Kennzeichen gespeichert ist. Alternativ kommen Magnetstreifen zum Einsatz. Die gemessene Maschenweite kann auch im Klartext auf den Siebrahmen geschrieben werden.

Die RFID-Transponder oder Magnetstreifen können überschreibbar ausgeführt sein um bei einer erneuten Vermessung der Maschenweite zum Zweck der Rekalibrierung der Siebe, die Siebe erneut zu kennzeichnen.

Diese Datenspeicher mit dem Kennzeichen sind unlösbar mit dem Sieb verbunden, dies ist die Vorraussetzung, dass es zu keiner ungewollten Verwechselung der Siebe kommt. Auch das Kennzeichen auf Basis von optischen Mustern oder Zeichenfolgen sind unlösbar mit dem Sieb verbunden.
Die Siebmaschine ist mit dem entsprechenden Datenerfassungsvorrichtung ausgestattet, wie optische Systeme, Magnetstreifen-Lesegeräte oder Lesegeräte für RFID-Transponder.
Das Messgerät zur Messung der Siebmaschenweiten muss mit einer entsprechenden Kennzeichnungsvorrichtung ausgerüstet sein, um das Sieb automatisch zu kennzeichnen. Hier werden Vorrichtungen eingebaut, die Barcodes oder 2-Codes schreiben können oder die entsprechenden Daten auf einem RFID-Transponder oder ein Magnetstreifen schreiben können.

Zur weiteren Ausgestaltung der Erfindung ist die Messvorrichtung zur Erfassung der Siebmaschenweite ein optisches bzw. optoelektronisches System.

In eine Ausführungsform der Erfindung kommen gebrauchte Siebe zum Einsatz. Diese werden neu vermessen und gekennzeichnet, d.h. rekalibriert. Sie liefern auch bei großen Abweichungen von der Nominalmaschenweite sehr genaue Siebergebnisse.

Weiterhin bevorzugt werden in Ausgestaltung des erfindungsgemäßen Verfahrens beim Einsatz eines Luftstrahlsiebes die Prozessparameter Probenmenge und/oder Siebdauer und/oder Luftmenge und/oder Unterdruck automatisch erfasst und eingestellt. Dies ermöglicht eine teil- oder vollautomatische Siebung. Bei einer Vibrationssiebmaschine wird die Schwingungsfrequenz, und/oder Siebdauer und/oder Siebintervalle eingestellt.

Weiterhin bevorzugt wird in Ausgestaltung der Erfindung ein Sieb zum Einsetzen in eine Siebmaschine vorgesehen, welches mit gemessenen Werten der Maschenweite des Siebs gekennzeichnet ist wobei die Kennzeichnung unverwechselbar mit dem Sieb verbunden ist und über eine Datenerfassungsvorrichtung der Siebmaschine ausgelesen werden kann und zur Bestimmung des Siebergebnisses verwendbar ist.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielhaft- ein bevorzugtes Ausführungsbeispiel der Erfindung dargestellt ist. In der Zeichnung zeigt:

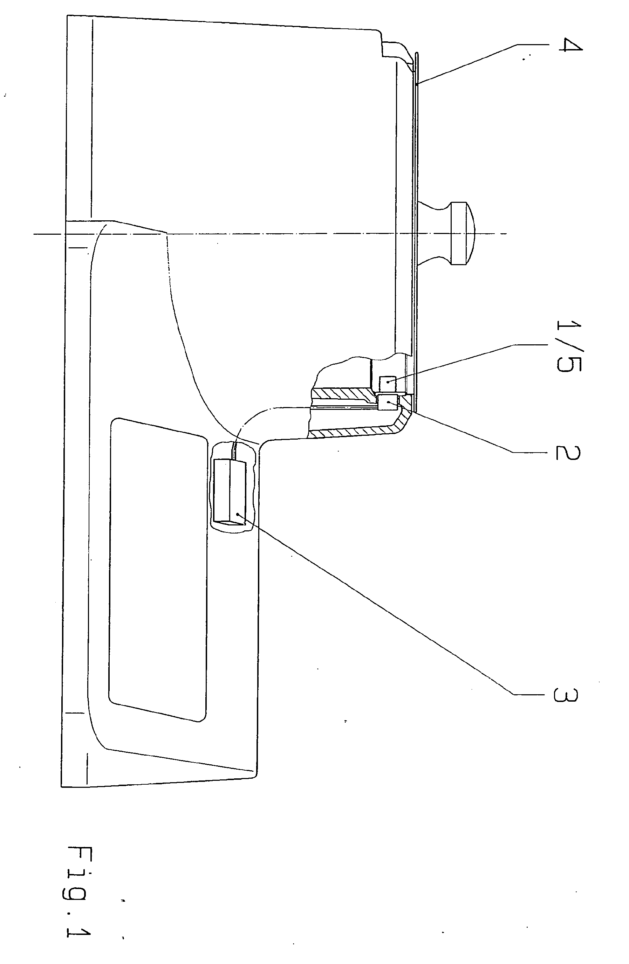

Fig. 1 eine Gesamtansicht einer Siebmaschine zur Durchführung des erfindungsgemäßen Verfahrens.

In Figur 1 ist ein Luftstrahlsieb zur Durchführung des Verfahrens dargestellt. Es weist ein in das Gehäuse eingesetztes Sieb 4 auf. Das Sieb besteht aus einem Rahmen in den ein ebenes Siebgewebe eingesetzt ist. Das Sieb 4 ist an seinem Außenumfang mit einem Kennzeichen 1 versehen. Das Kennzeichen 1 kann beispielsweise ein optisches Muster sein. Als Alternative kann das Kennzeichen 1 auf einem RFID-Transponder 5, der unlösbar mit dem Sieb 4 verbunden ist gespeichert sein. Die im Gehäuse der Siebmaschine angebrachte Datenerfassungsvorrichtung 2 steht mit dem Kennzeichen 1 oder den RFID-Transponder in Wirkverbindung, wenn das Sieb 4 in Gehäuse des Luftstrahlsiebs eingesetzt ist. Die Weiterverarbeitung des von dem Kennzeichen 1 oder dem beschreibbaren Speicher 5 gelesenen Signals erfolgt in einer Rechenvorrichtung 3, die auf Grundlage des jeweiligen Signals das gewünschte Siebergebnis berechnet.

## Patentansprüche

1. Verfahren zum Betreiben einer Siebmaschine zur Korngrößenanalyse welches folgende Schritte umfasst:
- Messung der Maschenweite eines Siebes mit einer Messvorrichtung
- Kennzeichnung des Siebes mit der Maschenweite
- Durchführung einer Siebung mit mindestens einem Sieb
**dadurch gekennzeichnet,**
- **dass** das Sieb mit der gemessenen Maschenweite gekennzeichnet wird,
- **dass** die Kennzeichnung des Siebes mit der gemessenen Maschenweite automatisch von der Messvorrichtung vorgenommen wird,
- **dass** die gemessene Maschenweite durch eine Datenerfassungsvorrichtung in der Siebmaschine aus der Kennzeichnung ausgelesen wird,
- **dass** die gemessene Maschenweite zur Bestimmung des Siebergebnisses herangezogen wird

2. Verfahren nach Anspruch 1 **dadurch gekennzeichnet, dass** die Messvorrichtung ein optoelektronisches System zur Messung der Maschenweite ist und eine Vorrichtung zur Kennzeichnung der Siebe aufweist

3. Verfahren nach einem oder mehreren der Ansprüche 1 bis 2 **dadurch gekennzeichnet, dass** die Kennzeichnung unverwechselbar mit dem Sieb verbunden ist

4. Verfahren nach einem oder mehreren der vorangegangenen Ansprüche **dadurch gekennzeichnet, dass** die Kennzeichnung eine Zeichenfolge oder ein optisch erfassbares Muster oder dass die Kennzeichnung in einem RFID-Transponder oder einem Magnetstreifen speicherbar ist

5. Verfahren nach einem oder mehreren der vorangegangenen Ansprüche **dadurch gekennzeichnet, dass** die Datenerfassungsvorrichtung ein RFID-Lesegerät, ein Magnetstreifen-Lesegerät oder ein optisches System ist

6. Verfahren nach einem oder mehreren der vorangegangenen Ansprüche **dadurch gekennzeichnet, dass** die Siebmaschine eine Analysensiebmaschine ist, speziell ein Luftstrahlsieb mit einem Sieb ist oder eine Siebvorrichtung unter Einbringung einer Bewegung auf das Sieb mit einem Sieb oder einem Turm aus mehreren Sieben ist

7. Verfahren nach einem oder mehreren der vorangegangenen Ansprüche **dadurch gekennzeichnet, dass** die Prozessparameter Probenmenge und/oder Siebdauer und/oder Luftmenge und/oder Unterdruck und/oder Schwingungsfrequenz automatisch erfasst und/oder eingestellt werden

8. Sieb zum Einsetzen in eine Siebmaschine zur Durchführung eines Verfahrens zur Korngrößenanalyse, gekennzeichnet mit der Maschenweite des Siebes **dadurch gekennzeichnet, dass**
- die Maschenweite ein gemessener Werte des Siebes ist und
- die Kennzeichnung mit der Maschenweite durch ein Datenerfassungsvorrichtung in der Siebmaschine aus der Kennzeichnung auslesbar ist und
- dass die Kennzeichnung unverwechselbar mit dem Sieb verbunden ist

9. Sieb nach Anspruch 10 **dadurch gekennzeichnet, dass** die Kennzeichnung Information über die gemessene Maschenweite und/oder den Mittelwert der Maschenweite und/oder die Standardabweichung und/oder die kleinste und/oder die größte Maschenweite und/oder die Anzahlverteilung der Maschenweite enthält

10. Sieb nach einem oder mehreren der Ansprüche 10 bis 11 **dadurch gekennzeichnet, dass** die gemessenen Werte der Maschenweite eines neuen Siebes oder eines gebrauchten Siebes zur Bestimmung des Siebergebnisses, speziell der Korngrößenverteilung verwendbar sind
